# EUROPÄISCHE PATENTSCHRIFT

(11) **EP 1 466 457 B1**
(45) Veröffentlichungstag und Bekanntmachung des Hinweises auf die Patenterteilung: **10.08.2005**
(21) Anmeldenummer: 02795283.7
(22) Anmeldetag: 30.12.2002
(51) Int. Cl.: H04L 27/26, H04M 11/06

(54) **VERFAHREN ZUM AUFBAU EINER DATENÜBERTRAGUNGSVERBINDUNG ZWISCHEN XDSL-TRANSCEIVERN**
METHOD FOR ESTABLISHING A DATA TRANSMISSION CONNECTION BETWEEN XDSL TRANSCEIVERS
PROCEDE D'ETABLISSEMENT D'UNE LIAISON DE TRANSMISSION DE DONNEES ENTRE DES EMETTEURS-RECEPTEURS XDSL

(30) Priorität: 15.01.2002 DE 10201415
(43) Veröffentlichungstag der Anmeldung: 13.10.2004
(73) Patentinhaber: Infineon Technologies AG, 81669 München (DE)
(72) Erfinder: HEISE, Bernd, 81825 München (DE)
(74) Vertreter: Reinhard - Skuhra - Weise & Partner GbR
(86) Internationale Anmeldenummer: PCT/EP2002/014799
(87) Internationale Veröffentlichungsnummer: WO 2003/061234

(56) Entgegenhaltungen:
- US-A- 5 852 631

## Beschreibung

Die Erfindung betrifft ein Verfahren zum Aufbau einer Datenübertragungsverbindung zwischen xDSL-Transceivern mit einer minimalen Warmstartzeitdauer. Ein Verfahren zum Aufbau einer Datenübertragungsverbindung zwischen Modems unter Verwendung einer Synchronisation und einer Echosignaleliminierung ist aus dem Patent US 5 852 631 bekannt.

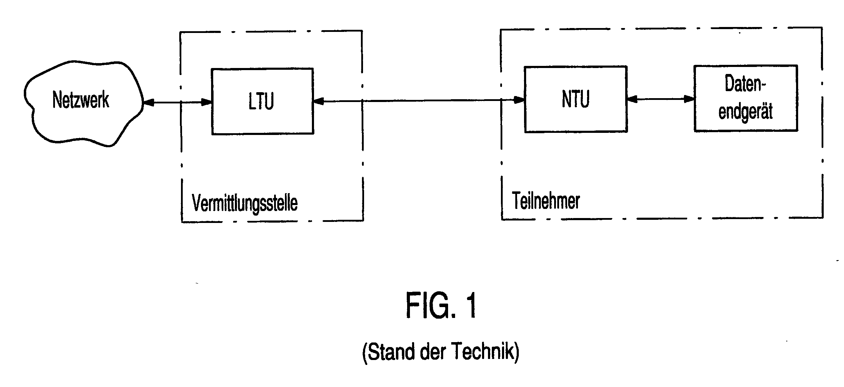

Fig. 1 zeigt ein Datenübertragungssystem nach dem Stand der Technik. Zwischen einer vermittlungsseitigen Sende- und Empfangseinrichtung bzw. Transceiver LTU (LTU: Line Terminating Unit) und einer teilnehmerseitigen Sende- und Empfangseinrichtung bzw. Transceiver NTU (NTU: Netwerk Terminating Unit) werden über eine Datenübertragungsleitung zum Aufbau einer Datenübertragungsverbindung für Nutzdaten zunächst Signalisierungsdaten übertragen. Der teilnehmerseitige Transceiver NTU ist eine Anschlussbuchse, die von dem Netzbetreiber bei einem Kunden bzw. Teilnehmer installiert wird. An den teilnehmerseitigen Transceiver NTU ist ein Datenendgerät, beispielsweise ein Computer angeschlossen. Der vermittlungsseitige Transceiver LTU ist an ein Netzwerk, beispielsweise das Fernsprechnetz angeschlossen. Bei der Datenübertragungsleitung handelt es sich in der Regel um eine Zweidrahttelefonleitung aus Kupfer.

Zum Aufbau einer Datenübertragungsverbindung sind die beiden Transceiver aus einem Bereitschaftsbetriebszustand in einen aktivierten Betriebszustand zur Datenübertragung zu überführen. Bei xDSL-Datenübertragungsverfahren werden die analogen verdrillten Zweidrahttelefonleitungen im Anschlussbereich analoger Netze breitbandig genutzt. Die bekanntesten xDSL-Datenübertragungsverfahren sind ADSL (ADSL: Asymetric-DSL), VDSL (VDSL: Very-High-Data-Rate-DSL), SDSL (SDSL- Symetrical-Single-Pair-DSL).

Nach erfolgtem Kaltstart und anschließender Deaktivierung befinden sich die beiden Transceiver zunächst in einem Energiesparmodus bzw. Betriebsbereitschaftsmodus. In dem Energiesparmodus verbrauchen die Transceiver eine minimale Leistung, so dass die erzeugte Wärme minimal und eine Kühlung nicht notwendig ist.

Fig. 2 zeigt eine Verbindung zwischen zwei Transceivern LTU, NTU nach dem Stand der Technik im Detail. Zum Aufbau einer Datenverbindung werden die Transceiver in einer Warmstartsequenz reaktiviert.

Fig. 3 zeigt eine mögliche Warmstartsequenz nach dem Stand der Technik, die in der Deutschen Patentanmeldung DE 101 39 779.8 beschrieben ist.

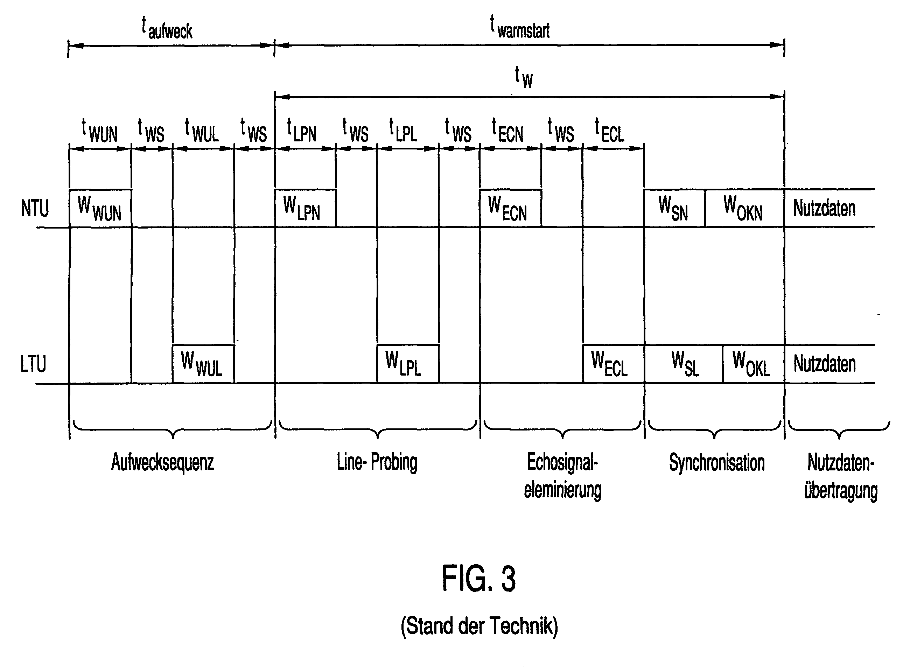

Zunächst sendet einer der beiden Transceiver ein Wecksignal über die Datenübertragungsleitung zu dem entfernt gelegenen Transceiver, um diesen zu aktivieren. Bei dem in Fig. 3 dargestellten Ablauf sendet der teilnehmerseitige Transceiver NTU ein Wecksignal W_{WUN} an den vermittlungsseitigen Transceiver LTU. Nach einer vorgegebenen Pausenzeit t_{WS} sendet der vermittlungsseitige Transceiver LTU ebenfalls ein Wecksignal W_{WUL} zurück über die Datenübertragungsleitung hin zu dem teilnehmerseitigen Modem NTU. Durch dieses Wecksignal quittiert das vermittlungsseitige Modem LTU den Empfang des ursprünglichen Wecksignals W_{WUN}.

Nach der Aufwecksequenz wird in einer Line-Probing-Phase bestimmt, ob sich die Leitungsparameter der Datenübertragungsleitung seit der letzten Aktivierung geändert haben. Hierzu sendet bei dem in Fig. 3 dargestellten Beispiel der teilnehmerseitige Transceiver NTU ein Line-Probing-Signal W_{LPN} über die Datenübertragungsleitung hin zu dem vermittlungsseitigen Transceiver LTU. Der vermittlungsseitige Transceiver wertet das Empfangssignal aus. Nach einer vorbestimmten Wartezeit t_{WS} sendet umgekehrt der vermittlungsseitige Transceiver LTU ebenfalls ein Line-Probing-Signal W_{LPL} an den teilnehmerseitigen Transceiver NTU. Das teilnehmerseitige Modem NTU wertet das Empfangssignal aus.

Nach der Überprüfung der Leitungsparameter erfolgt gegebenenfalls in einer weiteren Phase eine vollständige Echosignaleliminierung. Seit der letzten Aktivierung der beiden Transceiver können sich die Leitungsparameter der Datenübertragungsleitung geändert haben. Dies führt zu einem Restechosignal des eigenen Sendesignals eines Transceivers. Durch das Restechosignal kann die Erkennung eines von dem entfernt gelegenen Transceiver empfangenen Datensignals erschwert werden. Daher muss durch eine Echosignaleliminierung das Echosignal derart kompensiert werden, dass es unterhalb eines vorbestimmten Schwellenwertes liegt. Zur Echosignaleliminierung sendet bei dem in Fig. 3 dargestellten Beispiel das teilnehmerseitige Modem NTU ein Signal zur Echokompensierung aus, wobei das entfernt gelegene vermittlungsseitige Modem LTU kein Signal aussendet. Mit Hilfe des Signals W_{ECN} wird die Echokompensationsschaltung innerhalb des teilnehmerseitigen Modems NTU eingestellt. Nach einer vorbestimmten Wartezeit t_{WS} sendet anschließend das vermittlungsseitige Modem LTU ebenfalls ein Signal W_{ECL} zur Echosignalkompensation aus. Während dieser Zeit wird von dem anderen Modem NTU kein Signal ausgesendet. Mit Hilfe des Einstellsignals W_{ECL} wird die Echokompensationsschaltung innerhalb des vermittlungsseitigen Transceivers LTU zur Minimierung des Restechosignals eingestellt.

Nach der Echosignaleliminierung erfolgt in einer Synchronisationssequenz die Synchronisation zwischen den beiden Transceivern. Dabei sendet das teilnehmerseitige Modem NTU eine Synchronisationssignal W_{SN} zur Synchronisation des vermittlungsseitigen Transceivers LTU aus und umgekehrt sendet das vermittlungsseitige Modem LTU ein Synchronisationssignal W_{SL} zur Synchronisation des teilnehmerseitigen Modems NTU aus. Sobald die beiden Transceiver synchronisiert sind, senden sie jeweils ein Anzeigesignal an den anderen Transceiver, das die erfolgte Synchronisation anzeigt. Anschließend erfolgt die Nutzdatenübertragung zwischen den beiden Transceivern.

Für einen Warmstart zwischen zwei Transceivern ist es wünschenswert, dass die Zeitdauer für den Warmstart t_{Warmstart} möglichst gering ist. Bei der Warmstartsequenz nach dem Stand der Technik erfolgt die Ausmessung der Datenübertragungsleitung, die Echosignaleliminierung sowie die Synchronisation nacheinander bzw. seriell. Ein gravierendes Problem besteht dabei darin, dass für die Ausmessung der Datenübertragungsleitung und für die Echosignaleliminierung jeweils eine vorbestimmte worst-case-Zeit im Standard-Protokoll für den Aufbau der Datenübertragungsverbindung vorgesehen ist. Daher ist die Dauer für den Warmstart bei der Warmstartsequenz nach dem Stand der Technik relativ hoch.

Es ist daher die Aufgabe der vorliegenden Erfindung, ein Verfahren zum Aufbau einer Datenübertragungsverbindung zwischen xDSL-Transceivern zu schaffen, bei dem die Zeitdauer zum Aufbau der Datenübertragungsverbindung minimal ist.

Diese Aufgabe wird erfindungsgemäß durch ein Verfahren gemäß den in Patentanspruch 1 angegebenen Merkmal und durch einen xDSL-Transceiver, mit den im Patentanspruch 14 angegebenen Merkmalen gelöst.

Die Erfindung schafft ein Verfahren zum Aufbau einer Datenübertragungsverbindung zwischen xDSL-Transceivern mit den folgenden Schritten: Senden eines Echo-Einstellsignales (W_{ECL}) durch einen ersten xDSL-Transceiver (1) an einen zweiten xDSL-Transceiver (1) solange bis eine Echokompensationsschaltung (21) des ersten xDSL-Transceivers (1) eingestellt ist, wobei sich der zweite xDSL-Transceiver (1) auf das Echo-Einstellsignal (W_{ECL}) aufsynchronisiert und der zweite xDSL-Transceiver (NTU) nicht sendet; Senden eines ersten Synchronisationssignales (W_{SL}) durch den ersten xDSL-Transceiver (1) an den zweiten xDSL-Transceiver (1) zur Synchronisation des zweiten xDSL-Transceivers (1), wobei das erste Synchronisationssignal (W_{SL}) unterschiedlich zu dem Echo-Einstellsignal (W_{ECL}) ist; Senden eines zweiten Synchronisationssignales (W_{SN}) durch den zweiten xDSL-Transceiver (1) an den ersten xDSL-Transceiver (1) zur Synchronisation des ersten xDSL-Transceivers (1), wenn der zweite xDSL-Transceiver (1) durch das erste Synchronisationssignal (W_{SL}) vollständig synchronisiert ist, wobei das zweite Synchronisationssignal (W_{SN}) durch den zweiten xDSL-Transceiver (1) an den ersten xDSL-Transceiver (1) solange gesendet wird bis eine Echokompensationsschaltung (21) des zweiten xDSL-Transceivers (1) eingestellt ist, Senden eines ersten Anzeigesignals (W_{OKN}) durch den zweiten xDSL-Transceiver (1) an den ersten xDSL-Transceiver (1), welches dem ersten xDSL-Transceiver (1) anzeigt, dass die Echokompensationsschaltung (21) des zweiten xDSL-Transceivers (1) eingestellt und der zweite xDSL-Transceiver (1) synchronisiert ist; und Senden eines zweiten Anzeigesignals (W_{OKL}) durch den ersten xDSL-Transceiver (1) an den zweiten xDSL-Transceiver (1), welches dem zweiten xDSL-Transceiver (1) anzeigt, dass der erste xDSL-Transceiver (1) synchronisiert ist, wenn der erste xDSL-Transceiver (1) das erste Anzeigesignal (W_{OKN}) empfangen hat.

Ein Vorteil des erfindungsgemäßen Verfahrens besteht darin, dass es eine sehr geringe Störanfälligkeit aufweist, weil die verschiedenen Schritte zum Aufbau der Datenübertragungsverbindung, nämlich Ausmessung der Datenübertragungsleitung, Echosignaleliminierung und Synchronisation bei den beiden Transceivern jeweils sequentiell erfolgen und somit störende gegenseitige Beeinflussung bei den Einstellungen der Echokompensationsschaltungen der Entzerrer und der Synchronisationsschaltungen vermieden werden.

Vorteilhafte Ausgestaltungen des erfindungsgemäßen Verfahren sind in den Unteransprüchen angegeben.

Die Erfindung schafft ferner einen xDSL-Transceiver mit einem Signaleingang zum Empfang von digitalen Nutzdaten, einem Signalgenerator zur Generierung von Signalisierungsdaten,
einem steuerbaren Multiplexer zum Durchschalten der generierten Signalisierungsdaten oder der Nutzdaten in Abhängigkeit von einem Steuersignal,
einem Scrambler zum Scrambeln der von dem Multiplexer durchgeschalteten Daten,
einer Mappingeinheit zum Mappen der gescrambelten Daten, einem Codierer zum Codieren der gemappten Daten,
einem DA-Wandler zum Umwandeln der codierten Daten in ein analoges Sendesignal,
einer Hybridschaltung zum Anschluss des xDSL-Transceivers über eine Datenübertragungsleitung an einen entfernt gelegenen xDSL-Transceiver,
einem Analog-Digital-Wandler zum Umwandeln eines analogen Empfangssignals in ein digitales Empfangssignal,
einer Detektionsschaltung zur Detektion eines empfangenen Wecksignals,
einer Synchronisationsschaltung zum Aussynchronisieren auf das digitale Empfangssignal,
einer Echokompensationsschaltung zur Echosignalkompensation des digitalen Empfangssignals,
einem Entzerrer zur Entzerrung des digitalen Empfangssignals, einem Descrambler zum Descrambeln des entzerrten digitalen Empfangssignals,
und mit einer Steuereinheit,
wobei die Steuereinheit nach Detektion eines empfangenen Wecksignals durch die Detektionsschaltung oder nach Empfang eines Warmstartanforderungssignals den Codierer derart ansteuert, dass ein Echoeinstellsignal (W_{ECL}) von dem xDSL-Transceiver über die Datenübertragungsleitung gesendet wird,
wobei die Steuereinheit nach Empfang eines ersten Anzeigesignals von der Echokompensationsschaltung (W_{ECOK}), welches anzeigt, dass die Echokompensationsschaltung (EC) eingestellt ist, den Multiplexer derart ansteuert, dass eine generierte Synchronisationsdatenfolge an den Scrambler durchgeschaltet wird, welches als Synchronisationssignal (W_{SL}) von dem xDSL-Transceiver über die Datenübertragungsleitung zur Synchronisation des entfernt gelegenen xDSL-Transceivers gesendet wird,
wobei die Steuereinheit nach Empfang eines zweiten Anzeigesignals (W_{SYNCOK}) von der Synchronisationsschaltung, welches anzeigt, dass die Synchronisationsschaltung auf ein digitales Empfangssignal aufsynchronisiert ist, und nach Empfang eines dritten Anzeigesignals (W_{EQOK}) von dem Entzerrer (EQ), welches anzeigt, dass der Entzerrer (EQ) eingestellt ist, den Multiplexer derart ansteuert, dass eine generierte Synchronisationsdatenfolge an den Scrambler durchgeschaltet wird, das als Anzeigesignal (W_{OK}) von dem xDSL-Transceiver über die Datenübertragungsleitung an den entfernt gelegenen xDSL-Transceiver gesendet wird und diesem anzeigt, dass der xDSL-Transceiver zur Datenübertragung von Nutzdaten bereit ist.

Im weiteren werden bevorzugte Ausführungsformen des erfindungsgemäßen Verfahrens zum Aufbau einer Datenübertragungsverbindung sowie des erfindungsgemäßen xDSL-Transceivers unter Bezugnahme auf die beigefügten Figuren zur Erläuterung erfindungswesentlicher Merkmale beschrieben.

Es zeigen:
- Fig. 1: eine Datenübertragungsstrecke nach dem Stand der Technik;

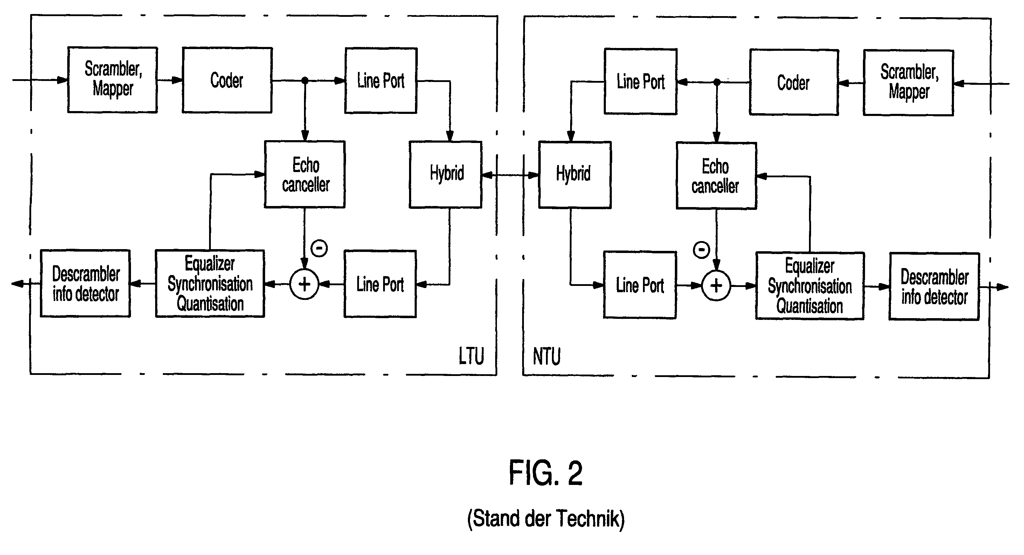

- Fig. 2: einen schaltungstechnischen Aufbau von herkömmlichen Transceivern;
- Fig. 3: ein Zeitablaufdiagramm, das den Aufbau einer Datenübertragungsverbindung zum Stand der Technik darstellt;

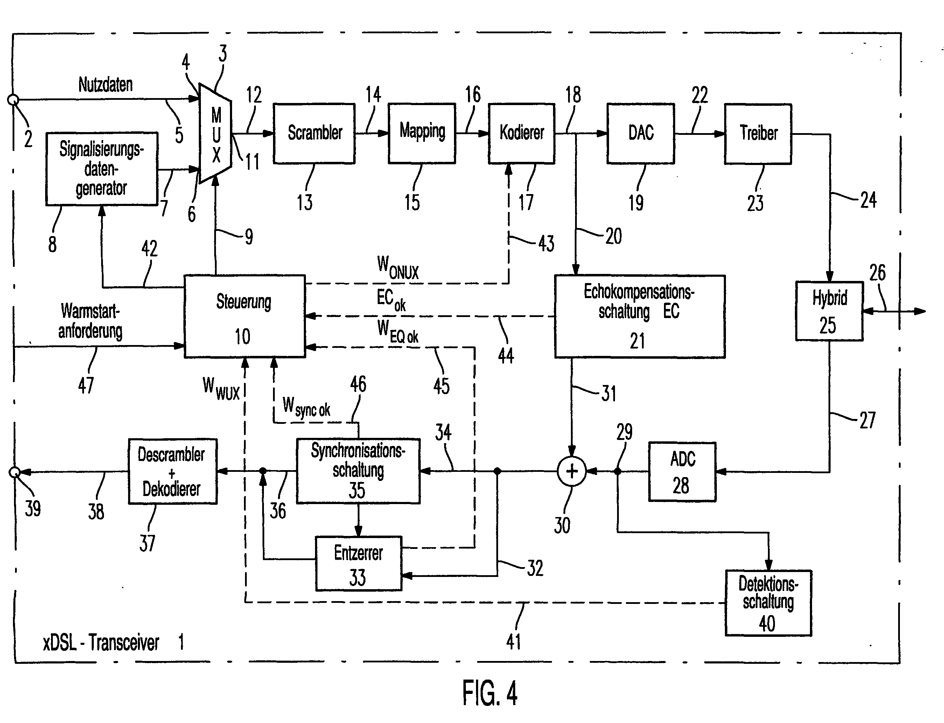

- Fig. 4: ein Blockschaltbild eines erfindungsgemäßen xDSL-Transceivers;

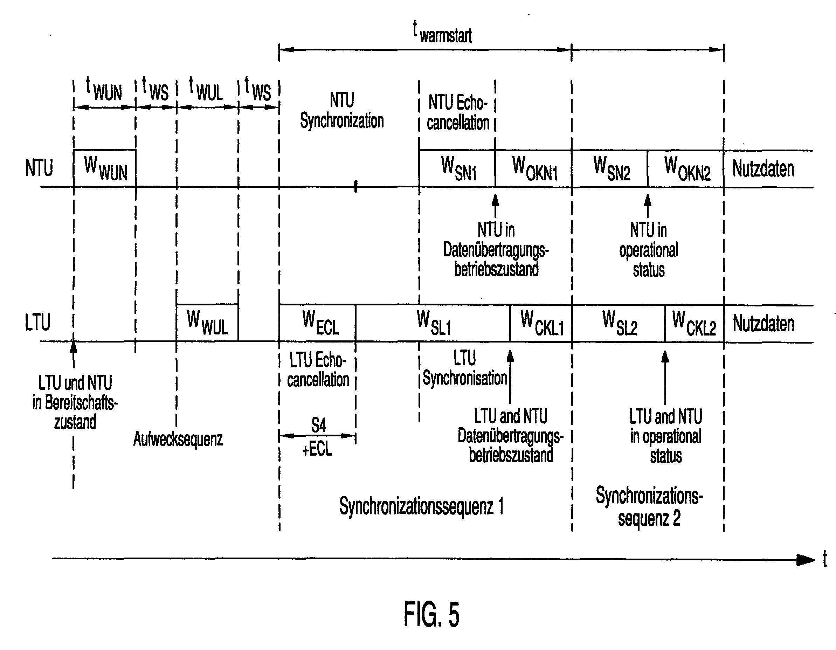

- Fig. 5: ein Ablaufdiagramm zur Erläuterung des erfindungsgemäßen Verfahrens zum Aufbau einer Datenübertragungsverbindung;

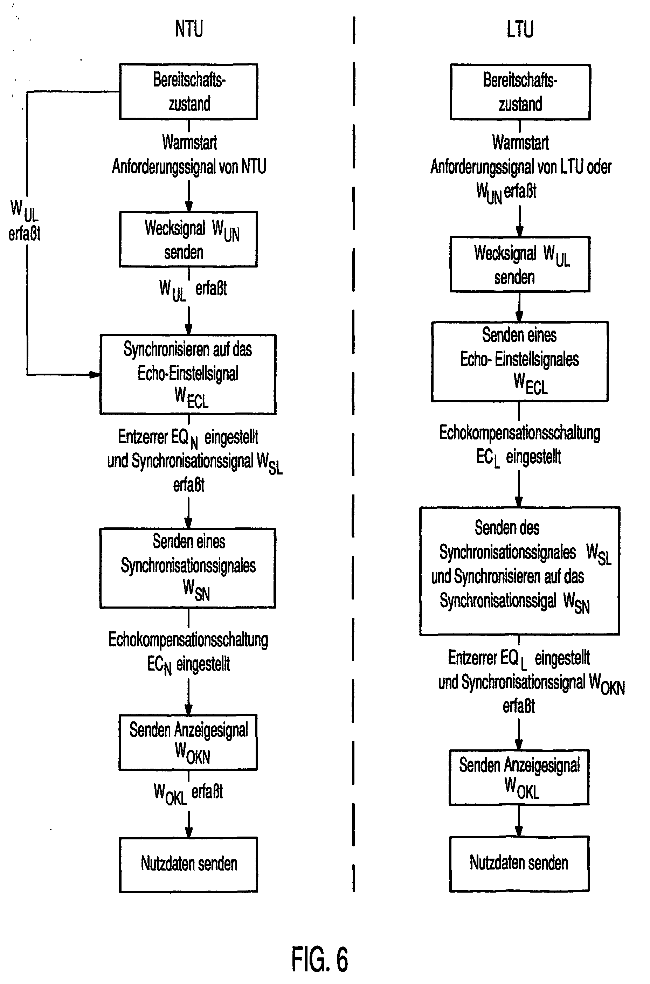

- Fig. 6: ein Zustandsdiagramm zur Erläuterung des erfindungsgemäßen Verfahrens zum Aufbau einer Datenübertragungsverbindung zwischen zwei xDSL-Transceivern.

Fig. 4 zeigt ein Blockdiagramm des erfindungsgemäßen xDSL-Transceivers 1. Der xDSL-Transceiver 1 besitzt mindestens einen Signaleingang 2 zum Empfang von digitalen Nutzdaten. Die digitalen Nutzdaten stammen entweder von einem Datenendgerät oder von einem Datennetz. Der xDSL-Transceiver 1 enthält ferner einen steuerbaren Multiplexer 3. Der steuerbare Multiplexer 3 besitzt einen ersten Eingang 4, der über eine Leitung 5 mit dem Signaleingang 2 für die Nutzdaten verbunden ist. Darüber hinaus besitzt der Multiplexer 3 einen zweiten Eingang 6, der über eine Leitung 7 an einen Signalisierungsdatengenerator 8 angeschlossen ist. Der Multiplexer 3 wird über eine Steuerleitung 9 durch eine interne Steuerung 10 des xDSL-Transceivers 1 geschaltet. Der Multiplexer 3 besitzt einen Signalausgang 11, der über eine Leitung 12 an einen Scrambler 13 angeschlossen ist.

Der Scrambler 13 ist über eine Leitung 14 ausgangsseitig an eine Mappingeinheit 15 zum Mappen der gescrambelten digitalen Daten angeschlossen. Die Mappingeinheit 15 ist ausgangsseitig über eine Leitung 16 an einen Codierer 17 zum Codieren der gemappten Daten angeschlossen.

Bei einer bevorzugten Ausführungsform des erfindungsgemäßen xDSL-Transceivers handelt es sich bei dem Codierer 17 um einen sogenannten Tomlinson-Codierer. Die codierten Daten gelangen über eine Leitung 18 an einen Digital-Analog-Wandler 19 und über eine Leitung 20 an eine Echokompensationsschaltung 21. Der Digitalanalogwandler 19 wandelt die anliegenden codierten Daten in ein analoges Sendesignal um, welches über eine interne Leitung 22 an eine Treiberschaltung 23 des xDSL-Transceivers 1 angelegt wird. Die Treiberschaltung 23 führt eine Signalverstärkung des anliegenden analogen Signals durch und gibt das verstärkte Signal über eine Leitung 24 an die Hybridschaltung 25 ab. Die Hybridschaltung 25 bildet den Anschluss des xDSL-Transceivers 1 an die Datenübertragungsleitung 26. Bei der Datenübertragungsleitung 26 handelt es sich vorzugsweise um eine Zweidrahtkupferleitung.

Die Hybridschaltung 25 ist über eine Leitung 27 an einen Analog-Digital-Wandler 28 angeschlossen, der das empfangene analoge Empfangssignal in digitale Empfangsdaten umwandelt und über eine Leitung 29 an einen Subtrahierer 30 abgibt. Der Substrahierer 30 subtrahiert von den digitalen Empfangsdaten das über eine Leitung 31 anliegende Ausgangssignal der Echokompensationsschaltung 21. Dem Substrahierer 30 ist über eine Leitung 32 ein Entzerrerschaltkreis bzw. ein Equalizer 33 nachgeschaltet. Der Equalizer bzw. Entzerrer dient der Fahr- und Signalrückgewinnung und gleicht die auftretenden Signalverzerrungen aus. Das Ausgangssignal des Subtrahierers 30 wird über eine Leitung 34 an eine Synchronisationsschaltung 35 des xDSL-Transceivers 1 abgegeben. Die Synchronisationsschaltung 35 dient zur Aufsynchronisation des xDSL-Transceivers 1 auf ein empfangenes Signal. Der Synchronisationsschaltung 35 ist über eine Leitung 36 ein Dekodier- und Descramblerschaltkreis 37 nachgeschaltet. Der Dekodierer/Descrambler 37 dekodiert und descrambelt die entzerrten Empfangsdaten und gibt die descrambelten Daten über eine Leitung 38 an einen Signalausgang 39 des xDSL-Transceivers 1 ab.

Der xDSL-Transceiver 1 enthält ferner eine Detektionsschaltung 40, die zur Detektion eines empfangenen Wecksignals vorgesehen ist. Die Detektionsschaltung 40 gibt ein Detektionssignal über eine Leitung 41 an die Steuerung 10 ab, wenn über die Datenübertragungsleitung 26 ein Aufwecksignal bzw. Aufwecktonsignal empfangen wird. Die Steuerung 10 steuert über eine Steuerungsleitung 42 den Signalisierungsdatengenerator 8. Darüber hinaus steuert die Steuerung 10 über Leitungen 43 den Codierer 17. Die Echokompensationsschaltung 21 und der Entzerrerschaltkreis 33 zeigen jeweils über Anzeigeleitungen 44, 45 der Steuerung 10 an, dass sie nach eigenen Kriterien eingestellt sind. Die Echokompensationsschaltung 21 zeigt über die Leitung 44 an, wenn sie konvergiert ist, d.h. wenn das Restechosignal unterhalb eines Schwellenwertes liegt.

Der Entzerrerschaltkreis 33 zeigt über die Leitung 45 der Steuerung 10 an, wenn das Farendsignal ausreichend entzerrt ist und somit der Entzerrer 33 eingestellt ist.

Darüber hinaus zeigt die Synchronisationsschaltung 35 über eine Leitung 46 der Steuerung 10 an, wenn eine ausreichenden Synchronisation auf das Datenempfangssignal erfolgt ist. Die Steuerung 10 kann darüber hinaus ein Warmstartanforderungssignal über eine Leitung 47 empfangen.

Die Fig. 5, 6 zeigen den Ablauf des erfindungsgemäßen Verfahrens zum Aufbau einer Datenübertragungsverbindung zwischen zwei erfindungsgemäßen xDSL-Transceivern 1.

Zunächst sendet einer der beiden xDSL-Transceiver 1 ein Wecksignal W_{WUN} zum Aufwecken des anderen Transceivers, der den Empfang des Wecksignals mit dem Aussenden eines Wecksignals W_{WUL} quittiert.

Nach einer bestimmten Wartezeit t_{WS} beginnt die erfindungsgemäße Synchronisationssequenz mit dem Aufbau der Datenübertragungsverbindung. In einem Schritt S1 sendet ein erster xDSL-Transceiver 1 ein Echo-Einstellsignal W_{ECL} an einen zweiten xDSL-Transceiver 1 solange bis die Echokompensationsschaltung 21 des ersten xDSL-Transceivers 1 eingestellt ist,
wobei sich der zweite xDSL-Transceiver 1 auf dieses Echo-Einstellsignal W_{ECL} bereits aufsychronisiert. Der zweite xDSL-Transceiver 1 sendet während dieses Zeitraumes kein Signal.

Nachdem die Echokompensationsschaltung 21 eingestellt ist, sendet der xDSL-Transceiver 1 ein zu dem Echo-Einstellsignal W_{ECL} unterschiedliches Synchronisationssignal W_{SL}, welches dem zweiten xDSL-Transceiver 1 anzeigt, dass die Echokompensationsschaltung 21 des ersten xDSL-Transceivers 1 eingestellt ist. Hierzu steuert die Steuerung 10 über die Steuerleitung 42 den Signalisierungsdatengenerator 8 derart an, dass dieser eine unterschiedliche Signalisierungsdatenfolge über die Leitung 7 an den Eingang 6 des Multiplexers 3 anlegt. Der Multiplexer 3 wird über die Steuerleitung 9 durch die Steuerung derart geschaltet, dass die generierte Signalisierungsdatenfolge an den Ausgang 11 des Multiplexers 11 durchgeschaltet wird. Der Nutzdateneingang 4 des Multiplexers 3 ist dabei gesperrt. Die generierte Signalisierungsdatenfolge wird durch den Scrambler 13 gescrambelt und anschließend durch die Mappingeinheit 15 gemapped. Durch den Codierer 17 werden die anliegenden gemappten Signalisierungsdaten codiert und durch den Digital-Analog-Wandler 19 in das erste Synchronisationssignal W_{SL} umgewandelt.

Wenn der zweite xDSL-Transceiver 1 an dem anderen Ende der Datenübertragungsleitung 26 durch das erste Synchronisationssignal W_{SL} vollständig synchronisiert ist und das erste Synchronisationssignal W_{SL} durch Vergleich mit der vorgegebenen Datenbitfolge als solches erkannt hat, sendet der zweite xDSL-Transceiver 1 an den ersten xDSL-Transceiver 1 ein zweites Synchronisationssignal W_{SN} zur Synchronisation des ersten xDSL-Transceivers 1. Dabei wird das zweite Synchronisationssignal W_{SN} durch den zweiten xDSL-Transceiver 1 an den ersten xDSL-Transceiver 1 solange gesendet bis die Echokompensationsschaltung 21 des zweiten xDSL-Transceivers eingestellt ist.

Der zweite xDSL-Transceiver 1 sendet anschließend an den ersten xDSL-Transceiver 1 ein erstes Anzeigesignal W_{OKN}, welches dem ersten xDSL-Transceiver 1 anzeigt, dass die Echokompensationsschaltung 21 des zweiten xDSL-Transceivers 1 eingestellt ist und der zweite xDSL-Transceiver 1 synchronisiert ist. Umgekehrt sendet der erste xDSL-Transceiver 1 an den zweiten xDSL-Transceiver 1 an zweites Anzeigesignal W_{OKL}, welches dem zweiten xDSL-Transceiver 1 anzeigt, dass der xDSL-Transceiver 1 synchronisiert ist, wenn der erste xDSL-Transceiver 1 das erste Anzeigsignal W_{OKN} empfangen hat.

Bei einer bevorzugten Ausführungsform des erfindungsgemäßen Verfahrens werden die Sendesignale durch den Codierer 17 Tomlinson codiert. Erfolgt keine Tomlinson-Vorcodierung ist gegebenenfalls eine weitere Synchronisationssequenz 2 erforderlich, wie sie in Fig. 5 dargestellt ist. Dabei sind die Signale W_{SN2}, W_{SL2}, W_{OKN2}, W_{OKL2} identisch mit den nicht-Tomlinsonvorcodierten Signalen der Synchronisationsequenz 1, wobei allerdings bei der Synchronisationssequenz 2 die Signale Tomlinson-vorcodiert werden.

Wie man durch Vergleich der Zeitablaufdiagramme der Fig. 3 und 5 erkennen kann, ist bei dem erfindungsgemäßen Verfahren zum Aufbau einer Datenübertragungsverbindung die benötigte Warmstartdauer t_{Warmstart}, insbesondere bei Tomlinson-Codierung der Signalisierungsdaten, wesentlich geringer als bei dem herkömmlichen Verfahren, wie es in Fig. 3 dargestellt ist.

Bei dem erfindungsgemäßen Verfahren ist das Echoeinstellsignal W_{ECL} derart strukturiert, dass sich der entfernt gelegene Transceiver 1 sich bereits aufsynchronisieren kann. Bei dem erfindungsgemäßen Verfahren erfüllt das Echo-Einstellsignal W_{EC} eine Doppelfunktion. Das Echo-Einstellsignal W_{ECL} dient einerseits zur Einstellung der eigenen Echokompensationsschaltung 21 und andererseits zur Synchronisierung des anderen xDSL-Transceivers 1 durch dessen Synchronisationsschaltung 35. Die vollständige Synchronisation des entfernt gelegenen Transceivers 1 erfolgt falls notwendig dann durch das gesendete erste Synchronisationssignal W_{SL}, das unterschiedlich zu dem Echoeinstellsignal W_{ECL} ist. Die Zeit t_{ECL} ist bei dem erfindungsgemäßen Verfahren im Gegensatz zu dem bisherigen Verfahren nicht konstant vorgeben. Das Echoeinstellsignal W_{ECL} wird durch den xDSL-Transceiver 1 nur solange ausgesendet, bis dessen Echokompensationsschaltung 21 vollständig eingestellt ist und dies über die Anzeigeleitung 44 der Steuerung 10 anzeigt. Die Steuerung 10 steuert dann über die Steuerleitung 42 den Signaldatengenerator 8 derart an, dass er eine andere Signalisierungsdatenfolge für das erste Synchronisationssignal W_{SL} generiert. Die Echosignaleliminierung erfolgt somit bei dem erfindungsgemäßen Verfahren innerhalb der Synchronisationssequenz, so dass die notwendige Warmstartzeit t_{Warmstart} bei dem erfindungsgemäßen Verfahren erheblich reduziert ist.

Fig. 6 dient zur Erläuterung des erfindungsgemäßen Verfahrens und zeigt ein Zustandsdiagramm beider kommunizierender Transceiver NTU, LTU. Die beiden Transceiver befinden sich zunächst in einem Bereitschaftsbetriebszustand bzw. in einem Energiesparmodus. Empfängt die Steuerung 10 eines Transceivers über die Leitung 47 ein Warmstartanforderungssignal oder erfasst sie ein Wecksignal, das über die Datenübertragungsleitung 26 von dem angeschlossenen anderen xDSL-Transceiver 1 stammt, wird der Bereitschaftsbetriebszustand verlassen.

Nach Austausch der Wecksignale wird bei der in Fig. 6 dargestellten Folge sendet das vermittlungsseitige Modem LTU ein Echo-Einstellsignal W_{ECL} auf das sich das teilnehmerseitige Modem NTU bereits aufsynchronisieren kann. Durch das Echo-Einstellsignal W_{ECL} stellt der vermittlungsseitige Transceiver NTU seine Echokompensationsschaltung 21 ein. Nachdem die Echokompensationsschaltung 21 eingestellt ist, wird dies der Steuerung 10 mitgeteilt, die den Signalgenerator 8 zur Generierung einer anderen Signalisierungsdatenfolge ansteuert.

Der Transceiver 1 auf der Vermittlungsseite LTU sendet dann ein Synchronisationssignal W_{SL} über die Datenübertragungsleitung 26. Durch das Synchronisationssignal W_{SL} wird der Entzerrer 35 des anderen Transceivers 1 eingestellt. Nach Einstellung des Entzerrers 35 und Erfassung des Synchronisationssignals W_{SL} geht der Transceiver 1 auf der Teilnehmerseite NTU in einen anderen Betriebszustand über und sendet nunmehr ein Synchronisationssigal W_{SN}. Dieses Signal W_{SN} wird durch den vermittlungsseitigen Transceiver LTU empfangen, wobei sich der Transceiver LTU auf das empfangene Synchronisationssignal W_{SN} aufsynchronisiert. Währenddessen wird die Echokompensationsschaltung EC_{N} des teilnehmerseitigen Transceivers NTU eingestellt.

Nach Einstellung der Echokompensationsschaltung EC_{N} sendet der teilnehmerseitige Transceiver NTU ein Anzeigesignal W_{OKN} über die Datenübertragungsleitung 26. Ist der Entzerrer 33 des vermittlungsseitigen Modems LTU eingestellt und erfasst der LTU-Transceiver das Anzeigesignal W_{OKN} von dem anderen Transceiver sendet er ebenfalls ein Anzeigesignal W_{OKL} an den gegenüberliegenden Transceiver. Nachdem der teilnehmerseitige Transceiver NTU das Anzeigesignal W_{OKL} erfasst hat, sind beide Transceiver bereit für den Nutzdatenaustausch über die Datenübertragungsleitung 26.

Bei dem erfindungsgemäßen Verfahren handelt es sich um ein Handshake-Verfahren zwischen den beiden xDSL-Transceivern 1. Dabei sind Apriori keine Zeitbedingungen vorgegeben. Der Aktivierungsfortschritt eines jeden Transceivers wird neben dem erreichen interner Bedingungen zusätzlich durch das Steuersignal von dem entfernten Transceiver gesteuert. Dabei wird der unerwünschte Zeitverlust durch den Austausch der Informations- bzw. Steuersignale mittels Parallelisierung der Abläufe minimiert. Beide Transceiver können ohne Steuersignale von der Gegenstelle in den eigenen Echocancler bzw. die Echokompensationsschaltung 21 einstellen. Zur gleichen Zeit synchronisiert und adaptiert sich die Gegenstelle.

### Bezugszeichenliste

- 1: xDSL-Transceiver
- 2: Signaleingang
- 3: Multiplexer
- 4: Eingang
- 5: Leitung
- 6: Eingang
- 7: Leitung
- 8: Signalisierungsdatengenerator
- 9: Steuerleitung
- 10: Steuerung
- 11: Ausgang
- 12: Leitung
- 13: Scrambler
- 14: Leitung
- 15: Mappingeinheit
- 16: Leitung
- 17: Codierer
- 18: Leitung
- 19: Digital-Analog-Wandler
- 20: Leitung
- 21: Echokompensationsschaltung
- 22: Leitung
- 23: Treiber
- 24: Leitung
- 25: Hybridschaltung
- 26: Datenübertragungsleitung
- 27: Leitung
- 28: Analog-Digital-Wandler
- 29: Leitung
- 30: Substrahierer
- 31: Leitung
- 32: Leitung
- 33: Entzerrer
- 34: Leitung
- 35: Synchronisationsschaltung
- 36: Leitung
- 37: Descrambler
- 38: Leitung
- 39: Ausgang
- 40: Detektionsschaltung
- 41: Anzeigeleitung
- 42: Steuerleitung
- 43: Steuerleitung
- 44: Anzeigeleitung
- 45: Anzeigeleitung
- 46: Anzeigeleitung
- 47: Steuerleitung

## Patentansprüche

1. Verfahren zum Aufbau einer Datenübertragungsverbindung zwischen xDSL-Transceivern (1) mit den folgenden Schritten:
(a) Senden eines Echo-Einstellsignales (W_{ECL}) durch einen ersten xDSL-Transceiver (1) an einen zweiten xDSL-Transceiver (1) solange bis eine Echokompensationsschaltung (21) des ersten xDSL-Transceivers (1) eingestellt ist,
wobei sich der zweite xDSL-Transceiver (1) auf das Echo-Einstellsignal (W_{ECL}) aufsynchronisiert und der zweite xDSL-Transceiver (1) nicht sendet;
(b) Senden eines ersten Synchronisationssignales (W_{SL}) durch den ersten xDSL-Transceiver (1) an den zweiten xDSL-Transceiver (1) zur Synchronisation des zweiten xDSL-Transceivers (1), wobei das erste Synchronisationssignal (W_{SL}) unterschiedlich zu dem Echo-Einstellsignal (W_{ECL}) ist;
(c) Senden eines zweiten Synchronisationssignales (W_{SN}) durch den zweiten xDSL-Transceiver (1) an den ersten xDSL-Transceiver (1) zur Synchronisation des ersten xDSL-Transceivers (1),
wenn der zweite xDSL-Transceiver (1) durch das erste Synchronisationssignal (W_{SL}) vollständig synchronisiert ist und das erste Synchronisationssignal als solches erkannt hat,
wobei das zweite Synchronisationssignal (W_{SN}) durch den zweiten xDSL-Transceiver (1) an den ersten xDSL-Transceiver (1) solange gesendet wird bis eine Echokompensationsschaltung (21) des zweiten xDSL-Transceivers (1) eingestellt ist,
(d) Senden eines ersten Anzeigesignals (W_{OKN}) durch den zweiten xDSL-Transceiver (1) an den ersten xDSL-Transceiver (1), welches dem ersten xDSL-Transceiver (1) anzeigt, dass die Echokompensationsschaltung (21) des zweiten xDSL-Transceivers (1) eingestellt und der zweite xDSL-Transceiver (1) synchronisiert ist; und
(e) Senden eines zweiten Anzeigesignals (W_{OKL}) durch den ersten xDSL-Transceiver (1) an den zweiten xDSL-Transceiver (1), welches dem zweiten xDSL-Transceiver (1) anzeigt, dass der erste xDSL-Transceiver (1) synchronisiert ist, wenn der erste xDSL-Transceiver (1) das erste Anzeigesignal (W_{OKN}) empfangen hat.

2. Verfahren nach Anspruch 1,
**dadurch gekennzeichnet,**
**dass** die Echokompensationsschaltungen (21) solange eingestellt werden, bis ein Restechosignal einen Schwellenwert unterschreitet.

3. Verfahren nach Anspruch 1 oder 2,
**dadurch gekennzeichnet,**
**dass** der zweite xDSL-Transceiver (1) kein Signal sendet, solange der erste xDSL-Transceiver (1) das Echo-Einstellsignal (W_{ECL}) sendet.

4. Verfahren nach einem der vorangehenden Ansprüche,
**dadurch gekennzeichnet,**
**dass** durch das erste Synchronisationssignal (W_{SL}) eine Entzerrungsschaltung (33) des zweiten xDSL-Transceivers (1) und
durch das zweite Synchronisationssignal (W_{SN}) eine Entzerrungsschaltung (33) des ersten xDSL-Transceivers (1) eingestellt wird.

5. Verfahren nach einem der vorangehenden Ansprüche,
**dadurch gekennzeichnet,**
**dass** den xDSL-Transceivern (1) zur Generierung der Sendesignale (W_{ECL}, W_{SL}, W_{SN}, W_{OKN}, W_{OKL}) jeweils eine entsprechende digitale Signalisierungdatenfolge zugeführt wird,
die durch einen Scrambler (13) des xDSL-Transceivers gescrambelt,
durch eine Mappingeinheit (15) des xDSL-Transceivers gemapped,
durch einen Kodierer (17) des xDSL-Transceivers codiert, durch einen Digital-Analog-Wandler (19) des xDSL-Transceivers in ein analoges Signal umgewandelt und
durch eine Treiberschaltung (23) des xDSL-Transceivers zu dem Sendesignal verstärkt wird, das über eine Datenübertragungsleitung (26) gesendet wird.

6. Verfahren nach einem der vorangehenden Ansprüche,
**dadurch gekennzeichnet,**
**dass** ein von einem xDSL-Transceiver über eine Datenübertragungsleitung empfangenes analoges Signal (W_{ECL}, W_{SL}, W_{SN}, W_{OKN}, W_{OKL}) jeweils durch eine Treiberschaltung des xDSL-Transceivers verstärkt,
durch einen Digital-Analog-Wandler (28) des xDSL-Transceivers in ein digitales Empfangssignal umgewandelt,
durch eine Echokompensationsschaltung (21) des xDSL-Transceivers echokompensiert,
durch einen Entzerrer (33) des xDSL-Transceivers entzerrt, und
durch einen Descrambler (37) des xDSL-Transceivers zur weiteren Datenverarbeitung descrambelt wird.

7. Verfahren nach einem der vorangehenden Ansprüche,
**dadurch gekennzeichnet,**
**dass** das Echoeinstellsignal (W_{ECL}) und das erste Synchronisationssignal (W_{SL}) aus unterschiedlichen Signalisierungsdatenfolgen generiert werden.

8. Verfahren nach einem der vorangehenden Ansprüche,
**dadurch gekennzeichnet,**
**dass** ein xDSL-Transceiver nach Empfang eines Warmstartanforderungssignales aus einem Bereitschaftsbetriebszustand in einen Datenübertragungsbetriebszustand versetzt wird.

9. Verfahren nach Anspruch 8,
**dadurch gekennzeichnet,**
**dass** ein in den Datenübertragungsbetriebszustand versetzter xDSL-Transceiver zunächst ein Wecksignal (W_{UN}, W_{UL}) an den anderen xDSL-Transceiver über die Datenübertragungsleitung sendet, um den anderen xDSL-Transceiver ebenfalls aus dem Bereitschaftsbetriebszustand in einen Datenübertragungsbetriebszustand zu versetzen.

10. Verfahren nach einem der vorangehenden Ansprüche,
**dadurch gekennzeichnet,**
**dass** die Datenübertragungsverbindung aufgebaut wird, wenn beide xDSL-Transceiver (1) in den Datenübertragungsbetriebszustand versetzt sind.

11. Verfahren nach einem der vorangehenden Ansprüche,
**dadurch gekennzeichnet,**
**dass** nach der Synchronisationssequenz Nutzdatensignale zwischen den beiden xDSL-Transceivern (1) über die Datenübertragungsleitung (26) übertragen werden.

12. Verfahren nach einem der vorangehenden Ansprüche,
**dadurch gekennzeichnet,**
**dass** die Signalisierungsdaten jeweils mit einem Tomlison-Code codiert werden.

13. Verfahren nach einem der vorangehenden Ansprüche 1 bis 11,
**dadurch gekennzeichnet,**
**dass** die beiden Synchronisationssignale (W_{SL}, W_{SN}) und die beiden Anzeigesignale (W_{OKN}, W_{OKS}) eine Synchronisationssequenz bilden, die wiederholbar ist.

14. xDSL-Transceiver mit
einem Signaleingang (2) zum Empfang von digitalen Nutzdaten,
einem Signalgenerator (8) zur Generierung von Signalisierungsdaten,
einem steuerbaren Multiplexer (3) zum Durchschalten der generierten Signalisierungsdaten oder der Nutzdaten in Abhängigkeit von einem Steuersignal,
einem Scrambler (13) zum Scrambeln der von dem Multiplexer durchgeschalteten Daten,
einer Mappingeinheit (15) zum Mappen der gescrambelten Daten,
einem Kodierer (17) zum Kodieren der gemappten Daten,
einem DA-Wandler (19) zum Umwandeln der codierten Daten in ein analoges Sendesignal,
einer Hybridschaltung (25) zum Anschluss des xDSL-Transceivers (1) über eine Datenübertragungsleitung (26) an einen entfernt gelegenen xDSL-Transceiver,
einem Analog-Digital-Wandler (28) zum Umwandeln eines analogen Empfangssignals in ein digitales Empfangssignal,
einer Detektionsschaltung (40) zur Detektion eines empfangenen Wecksignals,
einer Synchronisationsschaltung (35) zum Aussynchronisieren auf das digitale Empfangssignal,
einer Echokompensationsschaltung (21) zur Echosignalkompensation des digitalen Empfangssignals,
einem Entzerrer (33) zur Entzerrung des digitalen Empfangssignals,
einem Descrambler (37) zum Descrambeln des entzerrten digitalen Empfangssignals, und mit einer Steuereinheit (10), **dadurch gekennzeichnet, dass**:
die Steuereinheit (10) nach Detektion eines empfangenen Wecksignals durch die Detektionsschaltung (40) oder nach Empfang eines Warmstartanforderungssignals den Kodierer (17) derart ansteuert, dass ein Echoeinstellsignal (W_{ECL}) von dem xDSL-Transceiver (1) über die Datenübertragungsleitung (26) gesendet wird,
die Steuereinheit (10) nach Empfang eines ersten Anzeigesignals (W_{ECOK}) von der Echokompensationsschaltung (21), welches anzeigt, dass die Echokompensationsschaltung (21) eingestellt ist, den Multiplexer (3) derart ansteuert, dass eine generierte Synchronisationsdatenfolge an den Scrambler (13) durchgeschaltet wird, welches als Synchronisationssignal (W_{SL}) von dem xDSL-Transceiver (1) über die Datenübertragungsleitung (26) zur Synchronisation des entfernt gelegenen xDSL-Transceivers gesendet wird,
die Steuereinheit (10) nach Empfang eines zweiten Anzeigesignals (W_{SYNCOK}) von der Synchronisationsschaltung (35), welches anzeigt, dass die Synchronisationsschaltung (35) auf ein digitales Empfangssignal aufsynchronisiert ist, und nach Empfang eines dritten Anzeigesignals (W_{EQOK}) von dem Entzerrer (33), welches anzeigt, dass der Entzerrer (33) eingestellt ist, den Multiplexer (3) derart ansteuert, dass eine generierte Synchronisationsdatenfolge an den Scrambler (13) durchgeschaltet wird, das als Anzeigesignal (W_{OK}) von dem xDSL-Transceiver (1) über die Datenübertragungsleitung (26) an den entfernt gelegenen xDSL-Transceiver gesendet wird und diesem anzeigt, dass der xDSL-Transceiver (1) zur Datenübertragung von Nutzdaten bereit ist.

## Claims

1. Method for setting up a data transmission link between xDSL transceivers (1), comprising the following steps:
a) sending of an echo adjustment signal (W_{ECL}) by a first xDSL transceiver (1) to a second xDSL transceiver (1) until an echo cancellation circuit (21) of the first xDSL transceiver (1) is set, the second xDSL transceiver (1) synchronizing to the echo adjustment signal (W_{ECL}) and the second xDSL transceiver (1) not sending;
b) sending of a first synchronization signal (W_{SL}) via the first xDSL transceiver (1) to the second xDSL transceiver (1) for synchronizing the second xDSL transceiver (1), the first synchronization signal (W_{SL}) being different from the echo adjustment signal (W_{ECL});
c) sending of a second synchronization signal (W_{SN}) by the second xDSL transceiver (1) to the first xDSL transceiver (1) for synchronizing the first xDSL transceiver (1) when the second xDSL transceiver (1) is completely synchronized by the first synchronization signal (W_{SL}) and the first synchronization signal is detected as such, the second synchronization signal (W_{SN}) being sent by the second xDSL transceiver (1) to the first xDSL transceiver (1) until an echo cancellation circuit (21) of the second xDSL transceiver (1) is set,
d) sending of a first indicating signal (W_{OKN}) by the second xDSL transceiver (1) to the first xDSL transceiver (1), which indicates to the first xDSL transceiver (1) that the echo cancellation circuit (21) of the second xDSL transceiver (1) is set and the second xDSL transceiver (1) is synchronized;
e) and sending of a second indicating signal (W_{OKL}) by the first xDSL transceiver (1) to the second xDSL transceiver (1) which indicates to the second xDSL transceiver (1) that the first xDSL transceiver (1) is synchronized when the first xDSL transceiver (1) has received the first indicating signal (W_{OKN}).

2. Method according to Claim 1, **characterized in that** the echo cancellation circuits (21) are adjusted until a residual echo signal drops below a threshold value.

3. Method according to Claim 1 or 2, **characterized in that** the second xDSL transceiver (1) does not send a signal as long as the first xDSL transceiver (1) is sending the echo adjustment signal (W_{ECL}).

4. Method according to one of the preceding claims, **characterized in that** an equalizer (33) of the second xDSL transceiver (1) is adjusted by the first synchronization signal (W_{SL}) and an equalizer (33) of the first xDSL transceiver (1) is adjusted by the second synchronization signal (W_{SN}).

5. Method according to one of the preceding claims, **characterized in that** the xDSL transceivers (1), for generating the transmit signals (W_{ECL}, W_{SL}, W_{SN}, W_{OKN}, W_{OKL}) are in each case supplied with a corresponding digital signalling data sequence
which is scrambled by a scrambler (13) of the xDSL transceiver,
mapped by a mapping unit (15) of the xDSL transceiver,
coded by a coder (17) of the xDSL transceiver, converted into an analogue signal by a digital/analogue converter (19) of the xDSL transceiver and amplified by a driver circuit (23) of the xDSL transceiver to the transmit signal which is transmitted via a data transmission line (26).

6. Method according to one of the preceding claims, **characterized in that** an analogue signal (W_{ECL}, W_{SL}, W_{SN}, W_{OKN}, W_{OKL}), received from an xDSL transceiver by a data transmission line in each case amplified by a driver circuit of the xDSL transceiver,
is converted into a received digital signal by a digital/analogue converter (28) of the xDSL transceiver,
has its echoes cancelled by an echo cancellation circuit (21) of the xDSL transceiver,
is equalized by an equalizer (33) of the xDSL transceiver, and
descrambled by a descrambler (37) of the xDSL transceiver for further data processing.

7. Method according to one of the preceding claims, **characterized in that** the echo adjustment signal (W_{ECL}) and the first synchronization signal (W_{SL}) are generated from different signalling data sequences.

8. Method according to one of the preceding claims, **characterized in that** an xDSL transceiver, after receiving a warm start request signal, is brought from a standby mode into a data transmission mode of operation.

9. Method according to Claim 8, **characterized in that** an xDSL transceiver brought into the data transmission mode of operation first sends a wake-up signal (W_{UN}, W_{UL}) to the other xDSL transceiver via the data transmission line in order to also bring the other xDSL transceiver from the standby mode into a data transmission mode of operation.

10. Method according to one of the preceding claims, **characterized in that** the data transmission link is set up when both xDSL transceivers (1) have been brought into the data transmission mode of operation.

11. Method according to one of the preceding claims, **characterized in that** after the synchronization sequence, user data signals are transmitted between the two xDSL transceivers (12) via the data transmission line (26).

12. Method according to one of the preceding claims, **characterized in that** the signalling data are in each case coded with a Tomlinson code.

13. Method according to one of the preceding Claims 1 to 11, **characterized in that** the two synchronization signals (W_{SL}, W_{SN}) and the two indicating signals (W_{OKN}, W_{OKS}) form a synchronization sequence which can be repeated.

14. xDSL transceiver comprising
a signal input (2) for receiving digital user data, a signal generator (8) for generating signalling data, a controllable multiplexer (3) for switching through the generated signalling data or the user data in dependence on a control signal,
a scrambler (13) for scrambling the data switched through by the multiplexer,
a mapping unit (15) for mapping the scrambled data,
a coder (17) for coding the mapped data,
a D/A converter (19) for converting the coded data into an analogue transmit signal,
a hybrid circuit (25) for connecting the xDSL transceiver (1) via a data transmission line (26) to a remote xDSL transceiver,
an analogue/digital converter (28) for converting an analogue received signal into a digital received signal,
a detection circuit (40) for detecting a received wake-up signal,
a synchronization circuit (35) for synchronizing to the received digital signal,
an echo cancellation circuit (21) for echo signal cancellation in the received digital signal,
an equalizer (33) for equalizing the received digital signal,
a descrambler (37) for descrambling the equalized received digital signal,
and with a control unit (10), **characterized in that**
the control unit (10), after a received wake-up signal has been detected by the detection circuit (40) or after a warm start request signal has been received, controls the coder (17) in such a manner that an echo adjustment signal (W_{ECL}) is sent by the xDSL transceiver (1) via the data transmission line (26), the control unit (10), after receiving a first indicating signal (W_{ECOK}) from the echo cancellation circuit (21), which indicates that the echo cancellation circuit (21) is set, drives the multiplexer (3) in such a manner that a generated synchronization data sequence is switched through to the scrambler (13) which is sent as synchronization signal (W_{SL}) by the xDSL transceiver (1) via the data transmission line (26) for synchronizing the remote xDSL transceiver,
the control unit (10), after receiving a second indicating signal (W_{SYNCOK}) from the synchronization circuit (35), which indicates that the synchronization circuit (35) is synchronized to a received digital signal and after receiving a third indicating signal (W_{EQOK}) from the equalizer (33), which indicates that the equalizer (33) (EQ) is set, drives the multiplexer (3) in such a manner that a generated synchronization data sequence is switched through to the scrambler (13) which is sent as indicating signal (W_{OK}) by the xDSL transceiver (1) via the data transmission line (26) to the remote xDSL transceiver and indicates to the latter that the xDSL transceiver (1) is ready for the data transmission of user data.

## Revendications

1. Procédé pour l'établissement d'une liaison de transmission de données entre des émetteurs-récepteurs xDSL (1) avec les étapes suivantes :
(a) envoi d'un signal de réglage d'écho (W_{ECL}) par un premier émetteur-récepteur xDSL (1) à un deuxième émetteur-récepteur xDSL (1) jusqu'à ce qu'un circuit de compensation d'écho (21) du premier émetteur-récepteur xDSL (1) soit réglé,
le second émetteur-récepteur xDSL (1) se synchronisant sur le signal de réglage d'écho (W_{ECL}) et le second émetteur-récepteur xDSL (1) n'émettant pas ;
(b) envoi d'un premier signal de synchronisation (W_{SL}) par le premier émetteur-récepteur xDSL (1) au second émetteur-récepteur xDSL (1) pour la synchronisation du second émetteur-récepteur xDSL (1), le premier signal de synchronisation (W_{SL}) étant différent du signal de réglage d'écho (W_{ECL}) ;
(c) envoi d'un second signal de synchronisation (W_{SN}) par le second émetteur-récepteur xDSL (1) au premier émetteur-récepteur xDSL (1) pour la synchronisation du premier émetteur-récepteur xDSL (1),
lorsque le deuxième émetteur-récepteur xDSL (1) est complètement synchronisé par le premier signal de synchronisation (W_{SL}) et a reconnu le premier signal de synchronisation en tant que tel,
le second signal de synchronisation (W_{SN}) étant envoyé par le second émetteur-récepteur xDSL (1) au premier émetteur-récepteur xDSL (1) jusqu'à ce qu'un circuit de compensation d'écho (21) du second émetteur-récepteur xDSL (1) soit réglé,
(d) envoi d'un premier signal d'indication (W_{OKN}) par le second émetteur-récepteur xDSL (1) au premier émetteur-récepteur xDSL (1), lequel indique au premier émetteur-récepteur xDSL (1) que le circuit de compensation d'écho (21) du second émetteur-récepteur xDSL (1) est réglé et que le deuxième émetteur-récepteur xDSL (1) est synchronisé ; et
(e) envoi d'un deuxième signal d'indication (W_{OKL}) par le premier émetteur-récepteur xDSL (1) au second émetteur-récepteur xDSL (1), lequel indique au second émetteur-enregistreur xDSL (1) que le premier émetteur-récepteur xDSL (1) est synchronisé lorsque le premier émetteur-récepteur xDSL (1) a reçu le premier signal d'indication (W_{OKN}).

2. Procédé selon la revendication 1,
**caractérisé en ce que** les circuits de compensation d'écho (21) sont réglés jusqu'à ce qu'un signal d'écho résiduel passe au-dessous d'une valeur seuil.

3. Procédé selon la revendication 1 ou 2,
**caractérisé en ce que**
le second émetteur-récepteur xDSL (1) n'envoie pas de signal tant que le premier émetteur-récepteur xDSL (1) envoie le signal de réglage d'écho (W_{ECL}).

4. Procédé selon l'une quelconque des revendications précédentes,
**caractérisé en ce que**
un circuit d'égalisation (33) du second émetteur-récepteur xDSL (1) est réglé par le premier signal de synchronisation (W_{SL}) et
un circuit d'égalisation (33) du premier émetteur-récepteur xDSL (1) est réglé par le second signal de synchronisation (W_{SN}).

5. Procédé selon l'une quelconque des revendications précédentes,
**caractérisé en ce que**
une séquence de données de signalisation numérique appropriée est amenée à chacun des émetteurs-récepteurs xDSL (1) pour la génération des signaux d'émission (W_{ECL}, W_{SL}, W_{SN}, W_{OKN}, W_{OKL}),
qui est brouillée par un brouilleur (13) de l'émetteur-récepteur xDSL,
est mappée par une unité de mappage (15) de l'émetteur-récepteur xDSL,
est codée par un codeur (17) de l'émetteur-récepteur xDSL,
est convertie par un convertisseur numérique-analogique (19) de l'émetteur-récepteur xDSL en un signal analogique et est amplifiée par un circuit d'excitation (23) de l'émetteur-récepteur xDSL en un signal d'émission qui est envoyé par une ligne de transmission de données (26).

6. Procédé selon l'une quelconque des revendications précédentes,
**caractérisé en ce qu'**un signal (W_{ECL}, W_{SL}, W_{SN}, W_{OKN}, W_{OKL}) analogique reçu d'un émetteur-récepteur xDSL par une ligne de transmission de données est amplifié respectivement par un circuit d'excitation de l'émetteur-récepteur xDSL,
est converti par un convertisseur numérique-analogique (28) de l'émetteur-récepteur xDSL en un signal de réception numérique,
est compensé en écho par un circuit de compensation d'écho (21) de l'émetteur-récepteur xDSL,
est égalisé par un égaliseur (33) de l'émetteur-récepteur xDSL, et
est désembrouillé par un désembrouilleur (37) de l'émetteur-récepteur xDSL pour le traitement ultérieur des données.

7. Procédé selon l'une quelconque des revendications précédentes,
**caractérisé en ce que**
le signal de réglage d'écho (W_{ECL}) et le premier signal de synchronisation d'écho (W_{SL}) sont générés à partir de différentes séquences de données de signalisation.

8. Procédé selon l'une quelconque des revendications précédentes,
**caractérisé en ce que**
un émetteur-récepteur xDSL est déplacé d'un état de service d'attente à un état de service de transmission de données après la réception d'un signal de demande de démarrage à chaud.

9. Procédé selon la revendication 8,
**caractérisé en ce que**
un émetteur-récepteur xDSL mis dans l'état de service de transmission de données envoie d'abord un signal de réveil (W_{UN}, W_{UL}) à l'autre émetteur-récepteur xDSL par la ligne de transmission de données pour sortir l'autre émetteur-récepteur xDSL de l'état de service d'attente et le mettre dans un état de service de transmission de données.

10. Procédé selon l'une quelconque des revendications précédentes,
**caractérisé en ce que**
la liaison de transmission de données est établie
lorsque les deux émetteurs-récepteurs xDSL sont mis dans l'état de service de transmission de données.

11. Procédé selon l'une quelconque des revendications précédentes,
**caractérisé en ce que**, après la séquence de synchronisation, des signaux de données utiles sont transmis entre les deux émetteurs-récepteurs xDSL (1) par la ligne de transmission de données (26).

12. Procédé selon l'une quelconque des revendications précédentes,
**caractérisé en ce que**
les données de signalisation sont codées respectivement avec un code de Tomlison.

13. Procédé selon l'une quelconque des revendications précédentes,
**caractérisé en ce que**
les deux signaux de synchronisation (W_{SL}, W_{SN}) et les deux signaux d'indication (W_{OKN}, W_{OKS}) forment une séquence de synchronisation, qui est répétable.

14. Emetteur-récepteur xDSL avec
une entrée de signal (2) pour la réception de données utiles numériques,
un générateur de signal (8) pour la génération de données de signalisation,
un multiplexeur (3) contrôlable pour la commutation des données de signalisation générées ou des données utiles en fonction d'un signal de commande,
un brouilleur (13) pour le brouillage des données commutées par le multiplexeur,
une unité de mappage (15) pour le mappage des données brouillées,
un codeur (17) pour le codage des données mappées,
un convertisseur numérique-analogique (19) pour la conversion des données codées en un signal d'émission analogique,
un circuit hybride (25) pour le raccordement de l'émetteur-récepteur xDSL (1) par une ligne de transmission de données (26) à un émetteur-récepteur xDSL situé à distance,
un convertisseur analogique-numérique (28) pour la conversion d'un signal de réception analogique en un signal de réception numérique,
un circuit de détection (40) pour la détection d'un signal de réveil reçu,
un circuit de synchronisation (35) pour la synchronisation sur le signal de réception numérique,
un circuit de compensation d'écho (21) pour la compensation d'écho du signal
de réception numérique,
un égaliseur (33) pour l'égalisation du signal de réception numérique,
un désembrouilleur (37) pour le désembrouillage du signal de réception numérique brouillé,
et avec une unité de commande (10), **caractérisé en ce que** :
l'unité de commande (10) active le codeur (17) après la détection d'un signal de réveil par le circuit de détection (40) ou après la réception d'un signal de demande de démarrage à chaud de telle sorte qu'un signal de réglage d'écho (W_{ECL}) est envoyé par l'émetteur-récepteur xDSL (1) au moyen de la ligne de transmission de données (26),
l'unité de commande (10) active le multiplexeur (3) après la réception d'un premier signal d'indication (W_{ECOK}) du circuit de compensation d'écho (21), qui indique que le circuit de compensation d'écho (21) est réglé, de telle sorte qu'une séquence générée de données de synchronisation est commutée au brouilleur (13), qui est envoyé en tant que signal de synchronisation (W_{SL}) par l'émetteur-récepteur xDSL (1) par la ligne de transmission de données (26) pour la synchronisation de l'émetteur-récepteur xDSL situé à distance,
l'unité de commande (10) activant le multiplexeur (3) après la réception d'un second signal d'indication (W_{SYNCOK}) du circuit de synchronisation (35), qui indique que le circuit de synchronisation (35) est synchronisé sur un signal de réception numérique, et après la réception d'un troisième signal d'indication (W_{EQOK}) du brouilleur (33), qui indique que le brouilleur (33) est réglé, de telle sorte qu'une séquence générée de données de synchronisation est commutée au brouilleur (13), qui est envoyée comme signal d'indication (W_{OK}) par l'émetteur-récepteur xDSL (1) par la ligne de transmission de données (26) à l'émetteur-récepteur xDSL situé à distance et indique à celui-ci que l'émetteur-récepteur xDSL (1) est prêt pour la transmission de données utiles.
